Europäisches Patentamt

European Patent Office

Office européen des brevets

(11) Publication number: **0 417 765 A2**

# EUROPEAN PATENT APPLICATION

(21) Application number: 90117579.4

(51) Int. Cl.⁵: **B22C 9/04, B28B 1/26**

(22) Date of filing: **12.09.90**

(30) Priority: **14.09.89 JP 236862/89**

(43) Date of publication of application:
**20.03.91 Bulletin 91/12**

(84) Designated Contracting States:
**DE FR GB**

(71) Applicant: **NKK CORPORATION**
**1-2 Marunouchi 1-chome, Chiyoda-ku**
**Tokyo(JP)**

(72) Inventor: **Nishio, Hiroaki, c/o NKK Corporation**
**1-2, Marunouchi 1-chome**
**Chiyoda-ku, Tokyo(JP)**
Inventor: **Sato, Michitaka, c/o NKK**
**Corporation**
**1-2, Marunouchi 1-chome**
**Chiyoda-ku, Tokyo(JP)**
Inventor: **Kato, Akira, c/o NKK Corporation**
**1-2, Marunouchi 1-chome**
**Chiyoda-ku, Tokyo(JP)**

(74) Representative: **Patentanwälte Grünecker,**
**Kinkeldey, Stockmair & Partner**
**Maximilianstrasse 58**
**W-8000 München 22(DE)**

(54) Method of producing porous mold.

(57) A method of producing a porous mold for casting a molten metal or a slurry of metal powder, ceramic powder or the like which comprises foaming a plastic in a forming mold, forming a porous layer becoming the porous mold on the surface of the foamed body, and removing the foamed body. In the method of the invention, the filling into the forming mold is performed by foaming, and the formability appears by the solidification of the foamed body. The foamed body is a vanishable pattern removable by heating, solvent extraction or the like, and the porous mold can be obtained by removing the foamed body after the porous layer is formed. Because of using a plastic foamed body as the vanishable pattern, deformation, cracks, dimentional deviation of the pattern can be avoided.

FIG. I

EP 0 417 765 A2

# METHOD OF PRODUCING POROUS MOLD

## BACKGROUND OF THE INVENTION

### Field of the Invention

This invention relates to a method of producing a porous mold for casting a molten metal or a slurry of metal powder, ceramic powder or the like.

### Description of the Prior Art

It is known to mold a molten metal or a slurry of metal powder, ceramic powder or the like by casting into a porous mold composed of ceramic, gypsum, plastic, etc. In the case of the molten metal, the cast molten metal is solidified in the porous mold, and then the mold is removed to obtain a molded body. In the case of the slurry of metal powder or ceramic powder, there are three methods converting the slurry into a molded body having formability. The first method comprises solidifying the dispersion medium in the cast slurry in a porous mold by cooling, and then, removing the mold. Subsequently, the dispersion medium in the molded body is removed by thermal decomposition or extraction with a liquid or a supercritical fluid (Japanese Patent KOKAI No. 62-192502). The second method comprises exuding the dispersion medium from the cast slurry through the porous mold to induce formability, and then removing the porous mold. It is known to pressurize the slurry in the porous mold or to suck in vacuo from the outside of the porous mold for the purpose of accelerating the exudation (Motoki, "Ceramic Manufacturing Process I", p 123, p 257, Giho-do Shuppan, 1978). After demolding, the residual dispersion medium is removed by heating. The third method comprises removing the dispersion medium in the cast slurry by thermal decomposition or extraction with a liquid or a supercritical fluid, while, the slurry is placed in a porous mold. Thus, the cast slurry is converted into a molded body having formability, and then, the porous mold is removed (Japanese Patent Application No. 63-218300). The molded bodies so produced are sintered to obtain sintered bodies.

As the method of producing the porous mold used as explained above, a most suitable method for a complex shape comprises forming a porous layer on the surface of a vanishable pattern and removing the pattern to obtain a porous mold (Japanese Patent KOKOKU No. 53-16362). In this method, wax or urea is melted or half-melted, and injected into a mold. The mold is cooled to solidify the wax or urea, and demolded to obtain a molded body. The molded body is used as the vanishable pattern for producing the porous mold.

However, in the conventional process for producing the porous mold using the vanishable pattern, since the solidification phenomenon of the melted wax or urea is utilized for the production of the vanishable pattern, contraction of the patterns occurs accompanied with the solidification. Therefore, the occurrence of the deformation is unavoidable in the solidification process, and cracks are formed. Occasionally, demolding is impossible. The dimentional deviation cannot be neglected. Since the contraction rate of wax accompanied with the solidification is great, the above problems are serious. As a means to reduce the problems, the solidification is conducted from a half-melted state. However, this means requires to pressurize at a high pressure of 30 to 200 kg/cm$^2$, and an expensive metal mold is necessary.

## SUMMARY OF THE INVENTION

An object of the invention is to provide a method of producing a porous mold for casting a molten metal or a slurry of metal powder, ceramic powder or the like which does not have a problem of the deformation, cracks or demolding.

Another object of the invention is to provide a method of producing a porous mold for casting a molten metal or a slurry of metal powder, ceramic powder or the like of which the dimentional deviation can be neglected.

Another object of the invention is to provide a method of producing a porous mold for casting a molten metal or a slurry of metal powder, ceramic powder or the like inexpensively.

The present invention provides a method of producing a porous mold which has achieved the above objects by using a foamed body as the pattern. Thus, the method of the invention is of producing a porous mold for casting a molten metal or a slurry of metal powder, ceramic powder or the like, and comprises foaming a plastic in a forming mold, forming a porous layer becoming the porous mold on the surface of the foamed body, and removing the foamed body.

## BRIEF DESCRIPTION OF THE DRAWINGS

Figure 1 is a plan view of a bolt molded by using the porous mold produced in the examples of the invention, and

Figure 2 is a front view thereof.

## DETAILED DESCRIPTION OF THE INVENTION

The plastic which foams in the forming mold is polyurethane resin, epoxy resin, urea resin, polystyrene resin, polyethylene resin, polypropylene resin, ABS resin, polyvinyl chloride resin or the like. A suitable expansion ratio is 5 to 200 times. When the expansion ratio is less than 5 times, the filling of the plastic in the forming mold is insufficient, and the transferability becomes inferior. While, when it is beyond 200 times, the strength of the foamed body is weak due to the low density. The foamed body is liable to be broken or deformed.

The foaming of the plastic may be conducted according to a known method, such as adding a foaming agent. The foraming agent includes aliphatic hydrocarbons, cyclic hydrocarhons and halogenated hydrocarbons each having a great evaporation rate, and the compounds to generate a gas like nitrogen gas or carbon dioxide gas such as azo compounds, nitroso compounds and sulfonyl compounds.

The plastic as the foaming raw material may be granules or liquid, and the latter is preferred. In the case of granules, the boundary pattern of the foamed granules is occasionally transferred to the surface of the molded body to damage the surface smoothness. An example of the granular plastics is polystyrene formed from expandable polystyrene beads containing an aliphatic hydrocarbon such as propane, butane or pentane as the foaming agent. The beads are filled into a forming mold directly or after preliminary expansion, ancl they are expanded by heating with steam or the like to bind each other to form a pattern. While examples of liquid plastics includes polyurethane resin, epoxy resin and urea resin. For example, in the case of polyurethane resin, expansion occurs caused by the carbon dioxide gas generated through the reaction between isocyanate and polyester or polyether having hydroxyl group. There are commercial liquid expandable resins containing a catalist such as a basic material or a tin compound, a surfactant to arrange foams being anionic, cationic, silicone or the like, a foaming agent such as freon and the like, and these are applicable to the invention. In the case of liquid plastics, the transferability between the form of the cavity of the forming mold and the formed pattern is excellent.

A suitable temperature for the expansion depends on the kind of the plastic, the kind of the foaming agent and the like, and it is usually in the range from ordinary temperature to 250°C. A preferable temperature is near the temperature used for forming the porous layer. When the difference between the expansion temperature and the temperature for forming the porous layer is great, deformation occurs during adjusting the temperature of the foamed body to the temperature for forming the porous layer resulting to degrade the dimensional accuracy. Therefore, to render the temperature difference less than 120°C is preferred. In this regard, polyurethane resin, epoxy resin and urea resin are preferable because of expandable at ordinary temperature.

The forming mold may be anyone capable of expanding the foaming raw material in the cavity and taking the solidified foamed body out of the forming mold. The forming mold is usually a split mold capable of separating it into two pieces or more, and made of metal, plastic, wood or the like. When the foaming raw material is liquid, an inlet for the foaming raw material is necessary.

The foamed body is solidified through the reaction, termination and cooling. The porous layer becoming the porous mold is formed on the surface of the solidified foamed body taken out of the forming mold.

As the material composing the porous layer, gypsum, ceramic powders blended with an organic or inorganic binder, porous sintered ceramics such as alumina, porous sintered metals such a stainless steel, foamed organic materials having continuous pores, etc. are applicable. The ceramic powders blended with an organic or inorganic binder include ceramic shell molds used for casting molten metal which are applicable to the invention as it is. The shell molds are produced by forming a ceramic powder layer such as zircon, alumina or mullite blended with a hydrolyzate of ethyl silicate, colloidal silica or the like as the binder on the surface of the foamed body.

As the method of forming the porous layer on the surface of the foamed body, a coating layer of the aforementioned material is formed on the surface by applying a slurry thereof, immersing the foamed body in the slurry or the like, and then dried. The application means may be conventional such as brushing or spraying. The thickness of the coating layer is controlled by the concentration of the slurry, the times of applying or immersing or the like. A composite porous layer having various compositions can be formed by repeating the application or immersion using the slurries of which the composition varies.

After the porous layer is formed, the vanishable pattern, t.e. the foamed body, is removed. The removal means may be thermal decomposition or burning or extraction with a solvent. The solvent may be liquid or supercritical fluid. In the case of polystyrene foamed body, it can be removed by the extraction with ethyl acetate, acetone, ethylene dichloride, chloroform, carbon tetrachloride, benzene, toluene, xylene or the like.

The porous mold thus obtained is used for casting a molten metal or a slurry of metal powder, ceramic powder or the like by a known method. According to the material of the porous mold, some molds are used as it is, and some other molds are strengthed by heat treatment or the like prior to use.

In the method of the invention, the filling into the forming mold is performed by foaming, and the formability appears by the solidification of the foamed body through the termination of the foaming reaction and cooling. The foamed body is a vanishable pattern removable by heating, solvent extraction or the like, and the porous mold can be obtained by removing the foamed body after the porous layer is formed. Because of using a plastic foamed body as the vanishable pattern, the problems of the conventional method utilizing the solidification of melted wax or urea, such as deformation, cracks, dimensional deviation of the pattern, can be avoided. As a result, the porous molds having a high dimentional accuracy can be produced in a high yield.

EXAMPLES

Example 1

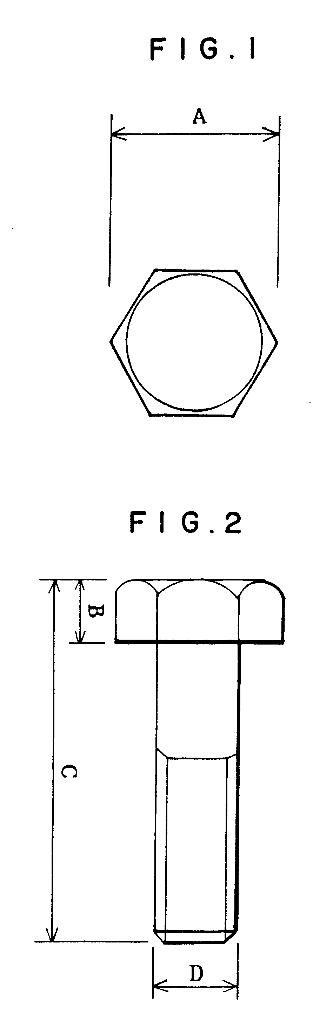

The forming mold used was a three pieces split type separable in the longitudinal direction having a cavity of the bolt form shown in Figures 1 and 2, and was made of silicone rubber. Two-component type polyurethane foaming raw material was poured in the mold at ordinary temperature, and kept for 3 minutes. The polyurethane foaming raw material was expanded 5 times, and filled the cavity. The forming mold was detached, and the solidified foamed body was taken out. The size of 20 pieces of the foamed body thus produced was measured, and found that each size of A, B, C, D in the figure conformed with the design size within -0.08 to 0.11 %. The surface of the foamed bodies were smooth, and the transferability was excellent.

The following four solutions were prepared. Solution I was a mixture of 70 parts by weight of methanol and 30 parts by weight of inorganic polysilazane oil, Solution II was a slurry of 30 parts by wight of methanol, 50 parts by weight of zircon flour of minus 130 mesh and 20 parts by weight of inorganic polysilazane oil, Solution III was a slurry of 50 parts by weight of methanol and 50 parts by weight of zircon sand of minus 325 mesh, and Solution IV was a slurry of 50 parts by weight of methanol and 50 parts by weight of high alumina sand having a grain size of 0.3 to 0.7 mm. The above solutions were kept at ordinary temperature, and the sedimentation was prevented by stirring using an electromagnetic stirrer.

The above foamed body was immersed in the solution I for 5 seconds, and taken out followed by drying. Then, it was immersed in the solution II for 30 seconds, taken out and dried, immersed in the solution III, and taken out and dried. The immersion in the solution II and the solution III was repeated again. Subsequently, it was immersed in the solution II for 5 seconds, taken out and dried, immersed in the solution IV for 30 seconds, and taken out and dried. This treated body was immersed in the solution II for 3 seconds, and taken out and dried.

The treated body was set in an atmosphere heating furnace, and heated to 600°C at a rate of 100°C/hr. The temperature was kept at 600°C for 5 hours, and then cooled naturally. During heating the foamed body disappeared entirely, and 20 pieces of the porous mold were obtained without defects such as cracking. Each porous mold was cut into two pieces in the longitudinal direction, and the size of A, B, C, D portions shown in Figures 1 and 2 was measured. Each size was within -0.08 to 0.12 % of the design size. The thickness of the porous layer was 3 to 4 mm.

Example 2

Expandable polystyrene beads (Sekisui Chemical Co., Ltd.) having a diameter of 300 μm were mixed with water, and heated to boil with stirring. The beads were preliminarily expanded about 20 times in diameter in the boiling water.

The expanded beads were naturally dried for 24 hours, and sieved to remove agglomerates.

The preliminarily expanded beads were put in a forming mold of three pieces split type separable in the longitidinal direction having a cavity of the bolt form shown in Figures 1 and 2. Subsequently, a flexible hose was joined to the filling inlet, and steam at 160°C at 6 atm. was blown in the cavity and effused from the joining portion of the forming mold. After keeping the above state for 30 minutes, the supply of steam was stopped, and naturally cooled. The size of 20 pieces of the foamed body thus produced was measured, and found that each size of A, B, C, D in the figure conformed with the design size within 0.51 to 0.60 %. Thought a granular pattern was observed on the surface, the transferability was excellent.

Similar to Example 1, the four solutions of I, II, III, IV were prepared, and coated on the surface of the above polystyrene foamed body. The treated body was immersed in acetone for 24 hours, and the foamed body was dissolved out. The remaining ceramic shell was taken out and dried. The polystyrene disappeared entirely, and 20 pieces of the porous mold thus obtained had no defect such as cracking. Each porous mold was cut into two pieces in the longitudinal direction, and the size of A, B, C, D portions shown in Figures 1 and 2 was measured. Each size was within 0.50 to 0.59 % of the design size. The thickness of the porous layer was 3 to 4 mm.

Comparative Example 1

A tank with a heater was joined to a forming mold of three pieces split type separable in the longitudinal direction having a cavity of the bolt form shown in Figures 1 and 2 by a flexible hose with a heater. Paraffin wax having a melting point of 75 to 85°C was put in the tank, and heated upto 80°C with stirring. The upper space of the tank was sucked in vacuo, and the wax was defoamed with stirring for 30 minutes. Then, the upper space was pressurized by the compressed at 5 kg/cm², and the paraffin wax was injected into the forming mold. After allowing to stand for 20 minutes, the pressure was released, and the molded pattern was taken out. Cracks were observed in 8 pieces per 20 pieces of the molded patterns at the boundary between the head portion and the shaft portion. The cracks were estimated to be caused by the contraction during the solidification. The size of the remaining 12 pieces of the molded pattern was measured, and each size of A, B, C, D in the figure was different from the design size in -0.96 to 1.63 % which were much greater than Examples 1 and 2.

## Claims

1. A method of producing a porous mold for casting a molten metal or a slurry of metal powder, ceramic powder or the like which comprises foaming a plastic in a forming mold, forming a porous layer becoming the porous mold on the surface of the foamed body, and removing the foamed body by the thermal decomposition or solvent extraction thereof.

2. The method of claim 1 wherein the plastic is liquid.

3. The method of claim 1 wherein the foaming temperature is in the range from ordinary temperature to 250°C.

4. The method of claim 1 wherein said porous mold is composed of a member selected from gypsum, ceramic powders blended with an organic or inorganic binder porous sintered ceramics, porous sintered metals and foamed organic materials having continuous pores.

5. The method of claim 1 wherein said porous mold is composed of a ceramic powder containing an inorganic binder.

# F I G . I

A

# F I G . 2

B

C

D